# EUROPÄISCHE PATENTSCHRIFT

(11) **EP 2 417 550 B1**
(45) Veröffentlichungstag und Bekanntmachung des Hinweises auf die Patenterteilung: **22.10.2014**
(21) Anmeldenummer: 10712415.8
(22) Anmeldetag: 31.03.2010
(51) Int. Cl.: G06F 21/34, G06F 21/35, G06F 21/42, G06F 21/43

(54) **VERFAHREN ZUR DURCHFÜHRUNG EINER APPLIKATION MIT HILFE EINES TRAGBAREN DATENTRÄGERS**
METHOD FOR EXECUTING AN APPLICATION USING A PORTABLE DATA CARRIER
PROCÉDE D'EXECUTION D'UNE APPLICATION À L'AIDE D'UN SUPPORT DE DONNÉES PORTABLE

(30) Priorität: 06.04.2009 DE 102009016532
(43) Veröffentlichungstag der Anmeldung: 15.02.2012
(73) Patentinhaber: Giesecke & Devrient GmbH, 81677 München (DE)
(72) Erfinder: BAUER, Sven, 85591 Vaterstetten (DE)
(86) Internationale Anmeldenummer: PCT/EP2010/054275
(87) Internationale Veröffentlichungsnummer: WO 2010/115795

(56) Entgegenhaltungen:
- WO-A1-01/54438
- WO-A1-95/19593
- WO-A1-99/44114
- WO-A2-96/00485
- US-A1- 2003 087 601

## Beschreibung

Die Erfindung betrifft ein Verfahren zur Durchführung einer Applikation mit Hilfe eines tragbaren Datenträgers sowie einen entsprechenden tragbaren Datenträger.

Persönliche tragbare Datenträger werden zunehmend eingesetzt, um Benutzern die Durchführung von softwarebasierten Nutzanwendungen unter Einsatz von Software zu ermöglichen, auf die der Benutzer nur beschränkten Zugriff hat. Ziel der softwarebasierten Nutzanwendungen ist typischerweise die Veränderung eines Datenbestandes, der von einem Dritten verwaltet wird. Ein Beispiel für solche softwarebasierte Nutzanwendungen ist insbesondere die Durchführung von elektronischen Transaktionen, etwa Bankgeschäftstransaktionen, über das Internet. Bei der Durchführung von im folgenden Applikationen genanten softwarebasierten Nutzanwendungen unter Zwischenschaltung einer Kommunikation zwischen einem Endgerät und einem Server besteht das Bedürfnis, die entsprechenden Kommunikationsverbindungen vor Manipulationen Dritter zu schützen. Dies spielt insbesondere eine Rolle bei der Durchführung von Applikationen in der Form von elektronischen Transaktionen über das Internet.

Aus dem Stand der Technik sind verschiedene Verfahren zum Schutz gegen Manipulationen von Transaktionen bekannt. Bei der elektronischen Durchführung von bankgeschäftlichen Transaktionen kommt insbesondere die Verwendung des PIN/TAN-Verfahrens in verschiedenen Ausprägungen zum Einsatz. Dabei loggt sich ein Benutzer über eine PIN mittels seines Browsers auf dem Bank-Server seiner Bank ein und gibt über eine entsprechende Datenverbindung, welche vorzugsweise kryptographisch gesichert ist, die Transaktionsdaten der durchzuführenden Transaktion ein. Beim einfachen TAN-Verfahren hat der Benutzer zuvor eine Liste von mehrstelligen TAN-Nummern erhalten, wobei die TAN-Nummern auch auf dem Bank-Server hinterlegt sind. Zum Abschluss einer Transaktion muss der Benutzer eine entsprechende, noch nicht benutzte TAN-Nummer von der Liste eingeben. Der Bank-Server überprüft dann, ob die TAN gültig ist, d.h. von der Liste des Benutzers stammt und vom Benutzer noch nicht verwendet wurde. Ist dies der Fall, wird die entsprechende bankgeschäftliche Transaktion schließlich durch den Server ausgeführt.

In einer Weiterbildung des obigen TAN-Verfahrens, dem sog. iTAN-Verfahren, ist die dem Benutzer vorliegende Liste an TAN-Nummern indiziert. Zur Erhöhung der Sicherheit wird der Benutzer zum Abschluss der Transaktion zur Eingabe einer TAN mit einer spezifischen Index-Nummer aufgefordert. Ein Angreifer, der eine TAN-Nummer von der Liste besitzt, muss deshalb unter Umständen eine Vielzahl von Versuchen zur Durchführung einer Transaktion unternehmen, bis schließlich vom Server die TAN mit dem Index abgefragt wird, die dem Betrüger zur Verfügung steht. Durch entsprechende Begrenzung der Anzahl an Fehleingaben kann die Sicherheit geeignet erhöht werden.

In einer weiteren Ausführungsform eines elektronischen TAN-Verfahrens, dem sog. mTAN-Verfahren, wird die einzugebende TAN dem Benutzer nicht vorab in der Form einer Liste übermittelt, sondern der Server übersendet die TAN als SMS-Nachricht an ein persönliches Mobilfunkgerät des Benutzers. Zur Bestätigung der Transaktion gibt der Benutzer die an sein Mobilfunkgerät übermittelte TAN, die ihm auf dem Display des Geräts angezeigt wird, über die Benutzerschnittstelle des Computers ein, an dem er das Internet-Banking durchführt. Dieses Verfahren bietet weitere Vorteile, da sich ein Angreifer mittels entsprechender Schadsoftware sowohl Kontrolle über den Computer, an dem das Internet-Banking durchgeführt wird, als auch über das Handy des Benutzers verschaffen muss. Dieses Verfahren weist jedoch den Nachteil auf, dass bei der Eingabe der TAN Verzögerungen auftreten, welche durch den SMS-Versand der TAN an das Handy hervorgerufen werden. Darüber hinaus entstehen dem Benutzer durch die SMS-Übertragung der TAN zusätzliche Kosten, da die Gebühren für den SMS-Versand dem Benutzer in der Regel berechnet werden.

WO96/00485 A2 beschreibt ein Verfahren zur Authentisierung eines Nutzers beim Zugriff auf einen elektronisch bereitgestellten Dienst über ein Terminal, das auf dem gleichen Prinzip beruht wie das vorerwähnte mTAN-Verfahren. Dem Nutzer wird dabei über ein separates persönliches Gerät, insbesondere ein Handy, ein von einer Servicezentrale bereitgestellter Authentisierungscode übermittelt, den der Nutzer dem Terminal präsentiert, welches ihn wiederum an die Servicezentrale schickt, wo er mit dem ursprünglich ausgesandten Authentisierungscode verglichen wird. Im Falle einer Übereinstimmung erhält der Nutzer den gewünschten Dienstezugriff.

Weitere auf demselben Prinzip beruhende, mTAN-artige Lösungen, in denen ein Authentisierungscode insbesondere über ein Mobilfunknetz an ein Handy übertragen und dort zu einer Anzeige führt, die der Nutzer in ein Terminal oder einen PC eingibt, sind aus der WO 95/19593 A1 und der WO 99/44114 A1 bekannt. Diese sowie die vorstehend erwähnte m-TAN-artigen Lösungen weisen dieselben Vor- und Nachteile wie das m-TAN-Verfahren auf. Insbesondere verursachen sie zusätzliche Kosten.

DE 10 2004046847A1 offenbart ein Verfahren zur Durchführung einer Transaktion, das mittels einer Chipkarte, einem PC und einem Server ausgeführt wird. Ausgehend von dem PC werden Transaktionsdaten zum einen über eine erste Datenverbindung an einen Server übermittelt und zum anderen über eine zweite Datenverbindung an die Chipkarte geleitet. Über eine dritte Datenverbindung schickt ferner der Server Authentisierungsdaten an die Chipkarte. Die Chipkarte führt mit den erhaltenen Daten Sicherheitsprüfungen durch und bringt in den Authentisierungsdaten enthaltene Daten zur Prüfung durch einen Nutzer zur Anzeige. Das Verfahren bietet eine hohe Sicherheit, setzt aber eine unbedingt vertrauenswürdige Anzeige voraus. Eine solche kann in einem geeigneten Kartenlesegerät bereitgestellt werden, verursacht dann aber entsprechenden Mehraufwand. In einer Variante schickt der Server die Authentisierungsdaten teilweise an ein Handy, auf dessen Anzeige in den Authentisierungsdaten enthaltene Daten zur Prüfung durch einen Nutzer wiedergegeben werden. Im Gutfall überträgt der Nutzer eine in den Authentisierungsdaten enthaltene Authentisierungsinformation über den PC an die Chipkarte. Da eine Handyanzeige als vertrauenswürdig angesehen werden kann, erhöht die Variante die Sicherheit weiter. Allerdings bedingt sie Verfügbarkeit und Nutzung eines Mobilfunknetzes. Dadurch wird zum einen die Anwendbarkeit des Verfahrens eingeschränkt, zum anderen verursacht die Nutzung des Mobilfunknetzes Aufwand und Kosten.

In der Druckschrift WO 2008/046575 A1 ist ein Verfahren zur Durchführung einer Applikation mit Hilfe eines tragbaren Datenträgers beschrieben, bei dem die Applikation mit Hilfe eines ersten und zweiten Endgeräts unter Zwischenschaltung des Datenträgers durchgeführt wird. Das Verfahren kann insbesondere auch zur Ausführung von elektronischen Banktransaktionen eingesetzt werden. Die dabei durchgeführte Kommunikation findet immer unter Zwischenschaltung des tragbaren Datenträgers statt. In dem Verfahren werden Transaktionsdaten zunächst über das erste Endgerät eingegeben, wobei das erste Endgerät insbesondere ein Personal-Computer ist. Daraufhin werden die Daten an den tragbaren Datenträger übermittelt, der diese an ein zweites Endgerät, z.B. an ein Handy, weiterleitet. Die Transaktion muss dann durch einen Benutzer mittels einer Eingabe an dem zweiten Endgerät freigegeben werden, woraufhin die Transaktionsdaten von dem Datenträger an einen Server übertragen werden, der die Transaktion ausführt.

In der Druckschrift US 2003/0087601 A1 ist die Verwendung eines Sicherheits-Tokens mit zwei Schnittstellen zur gesicherten Datenübertragung zwischen einem Handy und einem PC beschrieben. Der Token kommuniziert dabei über eine kontaktlose Schnittstelle, beispielsweise basierend auf Bluetooth oder Infrarot, mit dem Handy und über eine kontaktgebundene Schnittstelle mit dem PC.

Aufgabe der Erfindung ist es, ein Verfahren zur Durchführung einer Applikation mit Hilfe eines tragbaren Datenträgers zu schaffen, welches in einfacher Weise einen sicheren Datenaustausch bei der Ausführung der Applikation zwischen den an der Applikation beteiligten Komponenten ermöglicht.

Diese Aufgabe wird durch das Verfahren gemäß Patentanspruch 1 bzw. den tragbaren Datenträger gemäß Patentanspruch 15 gelöst. Weiterbildungen der Erfindung sind in den abhängigen Ansprüchen definiert.

In dem erfindungsgemäßen Verfahren wird zur Durchführung der Applikation ein persönlicher tragbarer Datenträger verwendet, der zwei getrennte Kommunikations-Schnittstellen umfaßt. In dem Verfahren werden zunächst von einem Benutzer über ein erstes Endgerät spezifizierte Eingabedaten, welche z.B. über eine entsprechende Benutzerschnittstelle des ersten Eingabegeräts eingegeben worden sind, an einen Server über eine erste Datenverbindung zwischen dem ersten Endgerät und dem Server übermittelt. Die Eingabedaten sind dabei zur Verarbeitung durch die Applikation vorgesehen. Anschließend werden Authentisierungsdaten zur Authentisierung der Applikation basierend auf den Eingabedaten, die beim Server empfangen wurden, von dem Server über eine zweite Datenverbindung zwischen dem Server und dem Datenträger, der zuvor über die erste Kommunikations-Schnittstelle mit dem ersten Endgerät verbunden wurde, übermittelt. Schließlich werden die Authentisierungsdaten von dem Datenträger über eine dritte Datenverbindung mittels der zweiten Kommunikations-Schnittstelle an das zweite Endgerät gesendet. Bei Bestätigung der Authentisierungsdaten durch den Benutzer über das erste oder das zweite Endgerät werden dann entsprechende Bestätigungsdaten an den Server über zumindest die erste oder zweite Datenverbindung übermittelt, woraufhin der Server die Applikation ausführt. Bei Bestätigung der Authentisierungsdaten über das erste Endgerät werden die Bestätigungsdaten insbesondere über die erste Datenverbindung an den Server übermittelt. Bei der Bestätigung der Authentisierungsdaten über das zweite Endgerät werden die Bestätigungsdaten vorzugsweise über die dritte und zweite Datenverbindung an den Server übermittelt.

Hier und im Folgenden ist unter einer ersten bzw. zweiten bzw. dritten Datenverbindung jeweils eine Datenverbindung zu verstehen, bei der ein durchgehender Datenkanal aufgebaut ist, so dass im Normalbetrieb keine Modifikation der zwischen den zwei Komponenten an den Endpunkten der Datenverbindung übermittelten Daten stattfindet. Das heißt, sofern technische Komponenten bei der Datenübertragung zwischengeschaltet sind, haben diese lediglich eine Weiterleitungs-Funktion und dienen nicht zur Veränderung bzw. Modifikation der Daten. Insbesondere fungiert das erste Endgerät, mit welchem der Datenträger verbunden wird, bei der Übermittlung der Daten über die zweite Datenverbindung als reiner Weiterleitungsknoten zum Weiterleiten von Daten zwischen dem Datenträger und dem Server. Die Datenverbindungen können somit auch als direkte bzw. unmittelbare Datenverbindungen zwischen den Komponenten an den jeweiligen Enden der Datenverbindung bezeichnet werden.

Das erfindungsgemäße Verfahren bietet den Vorteil, dass bei der Durchführung der Applikation eine Mehrzahl von Komponenten in der Form eines Servers, eines ersten Endgeräts und eines zweiten Endgeräts sowie eines tragbaren Datenträgers beteiligt sind. Dies erschwert die Möglichkeit von Manipulationen, da bei einem sicherheitskritischen Angriff mehrere Komponenten abgehört bzw. beeinflusst werden müssen. Darüberhinaus bietet das erfindungsgemäße Verfahren den Vorteil, dass nicht die Gesamtheit der zu übertragenden Daten über den Datenträger transportiert wird, sondern lediglich Authentisierungsdaten bzw. gegebenenfalls Bestätigungsdaten, so dass ein Datenträger mit einfacher Funktionalität bei der Datenübermittlung verwendet werden kann. Das erfindungsgemäße Verfahren läßt sich leicht realisieren, da zu seiner Einrichtung lediglich ein entsprechend gestalteter Datenträger bereitgestellt werden muß, während alle übrigen Komponenten ohne weiters verfügbar sind. Auch technisch geeignete tragbare Datenträger mit zwei getrennten Kommunikations-Schnittstellen sind grundsätzlich bereits bekannt.

Das erfindungsgemäße Verfahren wird vorzugsweise zur Durchführung von Applikationen über das Internet verwendet, so dass die erste und/ oder die zweite Datenverbindung vorzugsweise eine Datenverbindung über das Internet umfasst. Eine besonders hohe Sicherheit wird dabei dadurch erreicht, dass für die erste bzw. zweite Datenverbindung kryptographisch gesicherte Datenverbindungen eingesetzt werden, beispielsweise basierend auf den hinlänglich aus dem Stand der Technik bekannten Verschlüsselungs-Protokolls SSL/TLS.

In einer weiteren, besonders bevorzugten Ausführungsform wird als zweite Datenverbindung eine Datenverbindung unter Zwischenschaltung einer kontaktbehafteten Schnittstelle als erste Kommunikations-Schnittstelle verwendet, beispielsweise die hinlänglich aus dem Stand der Technik bekannte USB-Schnittstelle. Im Unterschied hierzu wird für die dritte Datenverbindung vorzugsweise eine Datenverbindung mittels einer kontaktlosen Schnittstelle als zweite Kommunikations-Schnittstelle verwendet, insbesondere eine kurzreichweitige NFC-Schnittstelle (NFC = Near Field Communication) und/oder eine Bluetooth-Schnittstelle. Durch die Verwendung kurzreichweitiger Schnittstellen wird die Gefahr der Manipulation der übermittelten Daten weiter reduziert. Gegebenenfalls ist es zusätzlich möglich, die dritte Datenverbindung kryptographisch abzusichern, beispielsweise unter Verwendung des bereits oben erwähnten SSL/TLS-Protokolls.

Das erfindungsgemäße Verfahren kann in einem beliebigen ersten bzw. zweiten Endgerät eingesetzt werden, wobei unter Endgerät ein Gerät zu verstehen ist, welches die entsprechenden, oben definierten Datenverbindungen unterstützt. Das heißt, das erste Endgerät ermöglicht eine Kommunikation über die erste Kommunikations-Schnittstelle und das zweite Endgerät über die zweite Kommunikations-Schnittstelle. Die Endgeräte weisen dabei eine Benutzerschnittstelle auf, über welche der Benutzer mit dem Gerät kommunizieren kann. Vorzugsweise ist das erste Endgerät ein Rechner bzw. Computer, insbesondere ein Personal-Computer. Ein Personal-Computer weist in der Regel eine gut bedienbare Benutzerschnittstelle in der Form einer Tastatur und eines großen Bildschirms auf, was den Vorteil hat, dass Daten von dem Benutzer sehr komfortabel eingegeben werden können. Das zweite Endgerät ist hingegen vorzugsweise ein mobiles Gerät, beispielsweise ein Handy (Mobiltelefon), das ein Benutzer in der Regel ständig mit sich trägt. Das zweite Endgerät verfügt wie das erste über eine Benutzerschnittstelle mit Ausgabemitteln, vorzugsweise in Gestalt eines Displays oder Bildschirms, sowie einer Dateneingabeeinrichtung in der Form einer Tastatur. Neben der Ausführung als Handy kann das zweite Endgerät auch als Laptop, PDA und dergleichen ausgestaltet sein.

In einer besonders bevorzugten Ausführungsform ist der tragbare Datenträger eine Chipkarte bzw. ein Token. Ein Token ist eine Hardwarekomponente, die Teil eines Systems zur Identifizierung bzw. Authentifizierung eines Benutzers ist. Ein Token kann dabei insbesondere als Chipkarte ausgestaltet sein. Als Chipkarten werden vorzugsweise sog. Dual-Interface-Karten eingesetzt, welche sowohl eine kontaktbehaftete als auch eine kontaktlose Schnittstelle besitzen, die im erfindungsgemäßen Verfahren als die erste und die zweite Kommunikations-Schnittstelle eingesetzt werden.

Ein besonders bevorzugter Anwendungsbereich des erfindungsgemäßen Verfahrens ist die Durchführung einer elektronischen Transaktion, insbesondere die Durchführung von elektronischen Bankgeschäften. Dabei werden als Eingabedaten über die erste Datenverbindung vorzugsweise Transaktionsdaten zur Spezifizierung der durchzuführenden Transaktion übermittelt, beispielweise entsprechende Daten betreffend den Empfänger einer Banküberweisung und den zu überweisenden Betrag.

In einer weiteren Variante des vorgeschlagenen Verfahrens werden über die zweite und dritte Datenverbindung als Authentisierungsdaten eine Kennung übermittelt, wobei neben der Kennung vorzugsweise auch eine Zusammenfassung der beim Server empfangenen Applikationsdaten übertragen wird. Im Anwendungsfall der Durchführung einer elektronischen Transaktion ist die Kennung insbesondere eine TAN-Nummer zur Authentisierung der Transaktion, wie sie eingangs erwähnt wurde.

In einer weiteren Variante des erfindungsgemäßen Verfahrens wird die Kennung dem Benutzer auf dem zweiten Endgerät ausgegeben, insbesondere wird die Kennung dem Benutzer optisch auf dem Display des Endgeräts angezeigt. Dabei erfolgt eine Bestätigung der Authentisierungsdaten durch den Benutzer durch Eingabe der ausgegebenen Kennung über das erste Endgerät, wobei als Bestätigungsdaten die eingegebene Kennung über die erste Datenverbindung an den Server übermittelt wird, welcher bei Übereinstimmung der empfangenen Kennung mit der ursprünglich von ihm über die zweite Datenverbindung ausgesendete Kennung die Applikation ausführt.

In einer weiteren Variante des erfindungsgemäßen Verfahrens erfolgt die Bestätigung der Authentisierungsdaten durch den Benutzer über eine Eingabe auf dem zweiten Endgerät, woraufhin Bestätigungsdaten an den Server über die dritte und zweite Datenverbindung übermittelt werden. Diese Variante hat den Vorteil, dass der Benutzer keine Eingabe am ersten Endgerät mehr vornehmen muss. Insbesondere kann durch geeignete Software sichergestellt werden, dass der Nutzer lediglich eine vorbestimmte Betätigungstaste am zweiten Endgerät eingeben muss, so dass gänzlich auf die Eingabe einer TAN durch den Benutzer verzichtet werden kann.

In einer weiteren bevorzugten Ausführungsform des erfindungsgemäßen Verfahrens wird die Applikation mit Hilfe eines auf dem tragbaren Datenträger gespeicherten Softwareprogramms durchgeführt, wobei in diesem Fall der Datenträger einen entsprechenden Massenspeicher zur Hinterlegung des Softwareprogramms umfasst. Dabei kann das Softwareprogramm von dem Benutzer nach Verbindung des Datenträgers über die erste Kommunikations-Schnittstelle mit dem ersten Endgerät gestartet werden. Hierdurch wird es einem Benutzer ermöglicht, auf beliebigen ersten Endgeräten mit der für ihn gewohnten Benutzerumgebung die Applikation durchzuführen.

Neben dem oben beschriebenen Verfahren betrifft die Erfindung ferner einen tragbaren Datenträger, insbesondere eine Chipkarte, umfassend eine erste Kommunikations-Schnittstelle und eine zweite Kommunikations-Schnittstelle, wobei der Datenträger dazu eingerichtet ist, jede Variante des oben beschriebenen erfindungsgemäßen Verfahrens durchzuführen.

Ausführungsbeispiele der Erfindung werden nachfolgend anhand der beigefügten Figur detailliert beschrieben.

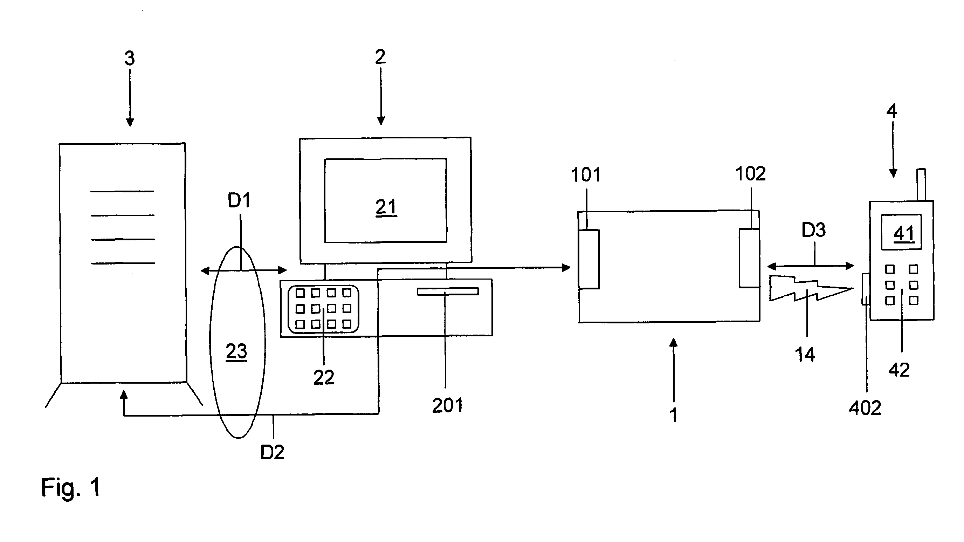

Fig.1 zeigt eine schematische Darstellung der in einer Ausführungsform des erfindungsgemäßen Verfahrens durchgeführten Schritte und der dabei verwendeten Komponenten.

Für die nachfolgende Beschreibung der Erfindung wird eine Ausführungsform zugrundgelegt, bei der die ausgeführte Applikation die sichere Ausführung einer Transaktion über das Internet ist. Die eingesetzten Komponenten umfassen einen persönlichen tragbaren Datenträger 1, einen sog. Token, mit zwei voneinander unabhängigen Kommunikations-Schnittstellen 101,102. Im Ausführungsbeispiel ist der Token 1 als Chipkarte bzw. Smartcard ausgestaltet. Es wird dabei vorteilhaft eine sog. Dual-Interface-Karte verwendet, die zum einen eine kontaktbehaftete Kommunikations-Schnittstelle 101 und zum anderen eine kontaktlose Kommunikations-Schnittstelle 102 aufweist. Die kontaktbehaftete Schnittstelle 101 kann beispielsweise als USB-Schnittstelle nach dem Standard ISO 7816 ausgestaltet sein. Die kontaktlose Schnittstelle 102 ist im Ausführungsbeispiel der Fig.1 eine Schnittstelle zur NFC-Kommunikation (NFC = Near Field Communication), mit der kontaktlos über elektromagnetische Hochfrequenzfelder über kurze Reichweiten Daten ausgetauscht werden können. Die kontaktlose Schnittstelle 102 beruht dabei auf dem Standard ISO 14443. Obgleich die Verwendung einer kontaktlosen und einer kontaktbehafteten Schnittstelle zweckmäßig ist, können die beiden Kommunikations-Schnittstellen 101,102 Selbstverständlich auch gemäß anderen Standards bzw. in anderen Kombinationen realisiert sein. Beispielsweise können beide Kommunikations-Schnittstellen 101,102 kontaktlos ausgeführt sein.

Weitere in Fig.1 gezeigte Komponenten sind ein erstes Endgerät 2 in Gestalt eines Rechners in der Form eines PCs 2 (PC = Personal Computer), ein Server 3, sowie ein zweites Endgerät 4 in Gestalt eines NFC-fähigen, d.h. mit einer NFC-Schnittstelle versehenen Handys respektive Mobiltelefons.

Der PC 2 besitzt eine zu der der Kommunikations-Schnittstelle 101 der Smartcard 1 korrespondierende Gegenschnittstelle 101, mittels der er über die Kommunikations-Schnittstelle 101 mit der Smartcard 1 verbunden ist. Er besitzt weiter eine Benutzerschnittstelle mit einer Tastatur 22 und einem Bildschirm 21. Der PC 2 ist ferner über ein Datennetz 23 mit dem Server 3 verbunden. Das Datennetz 23 ist im Ausführungsbeispiel das Internet; ohne weiteres kommen aber auch andere Netze, etwa zugangsbeschränkte Privatnetze, z.B. von Banken oder staatlichen Organisationen, in Frage.

Das zweite Endgerät 4 besitzt korrespondierend zur zweiten Kommunikations-Schnittstelle 102 der Smartcard 1 eine Schnittstelle 402 zur Herstellung von Datenverbindungen über ein von dem Datennetz 23 unabhängige Datenübertragungsstrecke 14. Zweckmäßig ist die Datenübertragungsstrecke 14 in Form eines lokalen Datennetzes ausgebildet und vorzugsweise in Form einer NFC-Kommunikation realisiert. Die Verwendung einer NFC-Kommunikation hat den Vorteil, dass wegen der geringen Feldreichweite der Kommunikation das Abhörrisiko bei einer Datenübertragung sehr gering ist. Die Schnittstelle 402 ist im Ausführungsbeispiel als NFC-Kommunikations-Schnittstelle ausgeführt, das Datennetz 14 eine NFC-Verbindung. Das zweite Endgerät 4 verfügt weiter wie das erste über eine Benutzerschnittstelle mit Ausgabemitteln 41, vorzugsweise in Gestalt eines Displays oder Bildschirms, sowie einer Dateneingabeeinrichtung in der Form einer Tastatur 42. Die Smartcard 1 ist mittels der Kommunikations-Schnittstelle 102 über die separate Datenübertragungsstrecke 14, d.h, die NFC-Verbindung, mit dem zweiten Endgerät 4, d.h. dem Handy 4 verbunden. Zur weiteren Absicherung kann die Datenübertragung zwischen der Smartcard 1 und dem Handy 4 ferner verschlüsselt erfolgen.

Ziel des Verfahrens ist die Durchführung einer Applikation, wobei das Verfahren beispielhaft an der Ausführung einer bankgeschäftlichen Transaktion über Internet-Banking erläutert wird. Zur Durchführung einer solchen Transaktion loggt sich ein Benutzer am PC 2 über seinen Browser zunächst bei dem Server 3 seiner Bank ein, so dass eine Datenverbindung D1 zwischen PC 2 und Bank-Server 3 über das Internet hergestellt wird. Es wird dabei insbesondere eine kryptographisch gesicherte Datenverbindung über das hinlänglich bekannte Protokoll SSL/TLS aufgebaut.

Zur Ausführung der Transaktion über den Bank-Server 3 gibt der Benutzer über die Benutzerschnittstelle, d.h. über eine Tastatur in Kombination mit einem Bildschirm, spezifizierte Eingabedaten, d.h. Transaktionsdaten in den Browser des PCs 2, ein. Bei den Transaktionsdaten kann es sich beispielsweise um Bankdaten eines Überweisungsempfängers, einen zu überweisenden Geldbetrag und einen Verwendungszweck handeln. Die eingegebenen Transaktionsdaten werden über die erste Datenverbindung D1 an den Server 3 übermittelt.

Zur Bestätigung der eingegebenen Transaktionsdaten ist die Präsentation einer transaktionsspezifischen, geheimen Kennung durch den Benutzer erforderlich, die eindeutig dieser Transaktion zugeordnet ist und die auf den übermittelten Transaktionsdaten basiert. Die Kennung, z.B. eine TAN, wird vom Server 3 bereitgestellt und muss an den Benutzer übermittelt werden. Hierzu verbindet der Benutzer die Smartcard 1 über die Kommunikations-Schnittstelle 101 mit der entsprechenden Gegenschnittstelle 201 des PCs 2. Daraufhin wird über dasselbe Datennetz 23, über das die erste Datenverbindung D1 hergestellt wurde, im Ausführungsbeispiel über das Internet, zwischen der Smartcard 1 und dem Server 3 eine weitere gesicherte Datenverbindung D2 aufgebaut. Der an der zweiten gesicherten Datenverbindung beteiligte PC 2 fungiert dabei lediglich als Router, der Daten nur weiterleitet ohne sie zu modifizieren. Um dies zu erreichen und zur Sicherung der Datenverbindung D2 wird vorzugsweise wiederum eine Verschlüsselung basierend auf dem Protokoll SSL/TLS eingesetzt. Die Verschlüsselung der zweiten Datenverbindung D2 hat den Vorteil, dass Schadsoftware auf dem PC 2 weder diese Verbindung abhören noch über sie laufende Inhalte gezielt manipulieren kann.

Über die zweite Datenverbindung D2 sendet der Bank-Server 3 sodann eine entsprechende Kennung, also etwa eine TAN, an die Smartcard 1. Zusammen mit der Kennung übermittelt der Bank-Server 3 zudem zweckmäßig eine Zusammenfassung der zuvor über die erste Datenverbindung D1 empfangenen Transaktionsdaten an die Smartcard 1.

Die Smartcard 1 überträgt nun die Kennung und, falls vorhanden, die Zusammenfassung der Transaktionsdaten mittels der zweiten Schnittstelle 102 weiter an das dem Benutzer gehörende Handy 4. Zu diesem Zweck baut die Smartcard 1 mittels der zweiten Kommunikations-Schnittstelle 102 über die als NFC-Kommunikation ausgebildete separate Datenübertragungsstrecke 14 eine dritte, kontaktlose Datenverbindung D3 zu dem Handy 4 auf. Über diese leitet die Smartcard 1 sodann die Daten an das Handy 4. Auf dem Display 41 des Handys 4 kann der Benutzer anschließend die Transaktionsdaten überprüfen, um gegebenenfalls von ihm eingegebene Fehler bzw. bei der Übertragung bewirkte Manipulationen zu erkennen und die Transaktion abzubrechen. Auf dem Display wird dem Benutzer ferner die Kennung, also etwa die TAN, für die Transaktion angezeigt.

Sind die auf dem Display des Handys 4 angezeigten Transaktionsdaten korrekt, kann der Benutzer über den Browser am PC 2 auf der entsprechenden Internetseite des Bank-Servers 3 die am Handy 4 angezeigte Kennung, also etwa die TAN, als Bestätigung eingeben, woraufhin die Kennung über die Datenverbindung D1 an den Server 3 übermittelt wird. Stellt der Server 3 die Übereinstimmung zwischen der zuvor über die Datenverbindung D2 ausgesendeten Kennung mit der nunmehr über die Datenverbindung D1 empfangenen Kennung fest, wird die gewünschte Applikation, im Ausführungsbeispiel die elektronische Transaktion, endgültig durch den Server 3 ausgeführt. Der Nutzer erhält über das Browserfenster eine entsprechende Rückmeldung.

Wie bei dem bekannten mTAN-Verfahren, bei dem die TAN über SMS an das Handy übermittelt wird, beruht die Sicherheit des erfindungsgemäßen Verfahrens darauf, dass es für einen Angreifer sehr schwierig ist, zwei unabhängige Endgeräte, also etwa sowohl einen Personal-Computer 2 und zusätzlich noch ein Handy 4 zu manipulieren. Die Sicherheit ist in dem Verfahren nach der Erfindung zudem erhöht, weil als zusätzliche Komponente noch eine dem Benutzer zugeordnete Smartcard 1 eingesetzt wird. Darüberhinaus hat das beschriebene Verfahren den Vorteil, dass die Kennung, also die TAN nicht über einen SMS-Versand, mithin über ein weiteres Datennetz an das Handy 4 gelangt, sodaß für den Benutzer und/oder den Serverbetreiber keine zusätzlichen Kosten für die Nutzung eines zweiten Datennetzes entstehen Vielmehr wird nur ein einzelnes Datennetz genutzt und eine zusätzliche Verbindung mithilfe eines persönlichen tragbaren Datenträgers realisiert, der mittels einer zusätzlichen Kommunikations-Schnittstelle eine ohne weiteres vorhandene lokale Datenverbindung zu einem ebenfalls ohne weiteres vorhandenen zweiten Endgerät zugänglich macht., nutzt. Darüberhinaus ist das hier beschriebene Verfahren schneller durchführbar, da die üblicherweise beim SMS-Versand vorhandene Zeitverzögerung bis zum Empfang der SMS nicht auftritt, so dass der Benutzer die Transaktion schneller abschließen kann.

Das anhand von Fig. 1 beschriebene Verfahren kann geeignet erweitert und ergänzt werden. So kann die Smartcard 1 zusätzlich einen Massenspeicher enthalten, auf dem eine entsprechende Software für die Durchführung des Internet-Banking gespeichert ist. Diese Software kann dann nach Verbindung der Smartcard 1 über die erste Schnittstelle 101 mit dem PC 2 gestartet werden und ermöglicht es dem Benutzer, sich seine gewohnte Arbeitsumgebung auch auf PCs 2 anzeigen zu lassen, welche er nicht regelmäßig zur Durchführung von Internet-Banking verwendet. Darüberhinaus kann zur Verarbeitung der auf dem Handy4 empfangenen Transaktionsdaten eine gesonderte Applikation anstatt der bereits auf dem Handy vorhandenen Software verwendet werden. Mit einer solchen Applikation ist es beispielsweise möglich, dass die Transaktion nicht mehr durch Eingabe einer entsprechenden TAN am PC 2 bestätigt wird, sondern indem der Benutzer eine entsprechende Taste bzw. Tastenkombination an seinem Handy 4 zur Bestätigung der Transaktion drückt. In diesem Falle entfällt das Eintippen einer TAN.

Das vorstehend beschriebene Verfahren hat ferner den Vorteil, dass nur TAN-bezogene Informationen über die Smartcard 1 laufen. Die Software auf der Smartcard 1 kann deshalb eine geringe Funktionalität aufweisen, da sie im wesentlichen Daten zum Handy 4 durchreicht. Es müssen hierzu auch nur geringfügige Änderungen an den Internetseiten des Bank-Servers 3 vorgenommen werden. Der Server 3 muss bei der Übermittlung der Authentisierungsdaten lediglich wissen, dass er die Transaktionsdaten und eine dazu passende TAN an die Smartcard 1 senden muss. Es ist dabei gegebenenfalls auch möglich, dass über den Server 3 sowohl Transaktionen mit herkömmlichen, dem Benutzer vorab übermittelten TAN-Listen als auch Transaktionen unter Zwischenschaltung der Smartcard 1 durchgeführt werden können. Gemäß dieser Variante muss der Server 3 lediglich überprüfen, ob der bei ihm eingeloggte Benutzer das herkömmliche TAN-Verfahren mittels einer Liste oder die TAN-Übermittlung über die Smartcard 1 verwendet. Im ersten Fall fragt der Server 3 eine entsprechende TAN aus der Liste ab und im zweiten Fall übermittelt der Server 3 eine TAN an die Smartcard 1.

## Patentansprüche

1. Verfahren zur Durchführung einer Applikation mit Hilfe eines tragbaren Datenträgers (1), wobei der Datenträger eine erste Kommunikations-Schnittstelle (101) und eine zweite Kommunikations-Schnittstelle (102) umfasst, und wobei zur Durchführung der Applikation eine Kommunikation mit einem Server (3) erforderlich ist, bei dem:
- zwischen einem ersten Endgerät (2) und dem Server (3) über ein Datennetz (23) eine erste Datenverbindung (D1) aufgebaut wird,
- von einem Benutzer über das erstes Endgerät (2) spezifizierte Eingabedaten zur Verarbeitung durch die Applikation an den Server (3) über die erste Datenverbindung (D1) übermittelt werden;
- der Datenträger (1) über die erste Kommunikations-Schnittstelle (101) mit dem ersten Endgerät (2) verbunden und zwischen dem Datenträger (1) und dem Server (3) über das Datennetz (23) eine zweite Datenverbindung (D2) aufgebaut wird,
- Authentisierungsdaten zur Authentisierung der Applikation basierend auf den Eingabedaten von dem Server (3) über die zweite Datenverbindung (D2) zwischen dem Server (3) und dem Datenträger (1) übermittelt werden;
- mittels der zweiten Kommunikations-Schnittstelle (102) zwischen dem Datenträger (1) und einem zweiten Endgerät (4) eine dritte Datenverbindung (D3) aufgebaut wird,
- die Authentisierungsdaten von dem Datenträger (1) über die dritte Datenverbindung (D3) an das zweite Endgerät (102) übermittelt werden;
- in den Authentisierungsdaten enthaltene Daten durch das zweite Endgerät (4) zur Prüfung durch den Benutzer ausgegeben werden;
- bei Bestätigung der Authentisierungsdaten durch den Benutzer über das erste oder das zweite Endgerät (2,4) Bestätigungsdaten an den Server (3) über zumindest die erste oder zweite Datenverbindung (D1, D2) übermittelt werden, woraufhin der Server (3) die Applikation ausführt.

2. Verfahren nach Anspruch 1, **dadurch gekennzeichnet, dass** die erste und/ oder die zweite Datenverbindung (D1, D2) eine Datenverbindung über das Internet umfasst, insbesondere eine kryptographisch gesicherte Datenverbindung.

3. Verfahren nach Anspruch 1 oder 2, **dadurch gekennzeichnet, dass** die zweite Datenverbindung (D2) eine Datenverbindung unter Zwischenschaltung einer kontaktbehafteten Schnittstelle als erster Kommunikations-Schnittstelle (101) ist, insbesondere einer USB-Schnittstelle.

4. Verfahren nach einem der vorhergehenden Ansprüche, **dadurch gekennzeichnet, dass** die dritte Datenverbindung (D3) eine Datenverbindung mittels einer kontaktlosen Schnittstelle als zweiter Kommunikations-Schnittstelle (102) ist, insbesondere einer NFC-Schnittstelle und/ oder einer Bluetooth-Schnittstelle.

5. Verfahren nach einem der vorhergehenden Ansprüche, **dadurch gekennzeichnet, dass** die dritte Datenverbindung (D3) kryptographisch gesichert ist.

6. Verfahren nach einem der vorhergehenden Ansprüche, **dadurch gekennzeichnet, dass** als erstes Endgerät (2) ein Rechner, insbesondere ein Personal-Computer, eingesetzt wird.

7. Verfahren nach einem der vorhergehenden Ansprüche, **dadurch gekennzeichnet, dass** als zweites Endgerät (4) ein mobiles Endgerät, insbesondere ein Handy, eingesetzt wird.

8. Verfahren nach einem der vorhergehenden Ansprüche, **dadurch gekennzeichnet, dass** als tragbarer Datenträger (1) eine Chipkarte und/ oder ein Token eingesetzt wird.

9. Verfahren nach einem der vorhergehenden Ansprüche, **dadurch gekennzeichnet, dass** die Applikation eine elektronische Transaktion, insbesondere eine elektronische Bankgeschäftstransaktion, ist.

10. Verfahren nach Anspruch 9, **dadurch gekennzeichnet, dass** als Eingabedaten über die erste Datenverbindung (D1) Transaktionsdaten zur Spezifizierung der durchzuführenden Transaktion übermittelt werden.

11. Verfahren nach einem der vorhergehenden Ansprüche, **dadurch gekennzeichnet, dass** über die zweite und dritte Datenverbindung (D2, D3) als Authentisierungsdaten eine Kennung übermittelt wird, wobei neben der Kennung vorzugsweise eine Zusammenfassung der beim Server (3) empfangenen Eingabedaten übertragen wird.

12. Verfahren nach Anspruch 11, **dadurch gekennzeichnet, dass** die Kennung dem Benutzer auf dem zweiten Endgerät (4) ausgegeben wird, wobei eine Bestätigung der Authentisierungsdaten durch den Benutzer durch Eingabe der ausgegebenen Kennung über das erste Endgerät (2) erfolgt und als Bestätigungsdaten die eingegebene Kennung über die erste Datenverbindung (D1) an den Server (3) übermittelt wird, welcher bei Übereinstimmung der empfangenen Kennung mit der ursprünglich über die zweite Datenverbindung (D2) übermittelten Kennung die Applikation ausführt.

13. Verfahren nach einem der vorhergehenden Ansprüche, **dadurch gekennzeichnet, dass** die Bestätigung der Authentisierungsdaten durch den Benutzer über eine Eingabe auf dem zweiten Endgerät (4) erfolgt, woraufhin Bestätigungsdaten an den Server (3) über die dritte und zweite Datenverbindung (D3, D2) übermittelt werden.

14. Verfahren nach einem der vorhergehenden Ansprüche, **dadurch gekennzeichnet, dass** die Applikation mit Hilfe eines auf dem tragbaren Datenträger (1) gespeicherten Softwareprogramms durchgeführt wird, welches von dem Benutzer nach Verbindung des Datenträgers (1) über die erste Kommunikations-Schnittstelle mit dem ersten Endgerät (2) gestartet werden kann.

15. Tragbarer Datenträger, insbesondere Token oder Chipkarte, mit einer ersten Kommunikations-Schnittstelle (101) und einer zweiten Kommunikations-Schnittstelle (102), wobei der Datenträger (1) dazu eingerichtet ist, ein Verfahren nach einem der vorhergehenden Ansprüche durchzuführen.

## Claims

1. A method for carrying out an application with the help of a portable data carrier (1), wherein the data carrier comprises a first communication interface (101) and a second communication interface (102), and wherein for carrying out the application there is required a communication with a server (3), in which:
- between the first terminal (2) and the server (3) there is established via a data network (23) a first data connection (D1),
- by a user there are transmitted via the first terminal (2) specified input data for processing by the application to the server (3) via the first data connection (D1),
- the data carrier (1) is connected via the first communication interface (101) with the first terminal (2) and between the data carrier (1) and the server (3) there is established via the data network (23) a second data connection (D2),
- authentication data for authenticating the application based on the input data are transmitted from the server (3) via the second data connection (D2) between the server (3) and the data carrier (1),
- by means of the second communication interface (102) between the data carrier (1) and a second terminal (4) there is established a third data connection (D3),
- the authentication data are transmitted from the data carrier (1) via the third data connection (D3) to the second terminal (102),
- data contained in the authentication data are outputted through the second terminal (4) for checking by the user,
- upon confirmation of the authentication data by the user via the first or the second terminal (2, 4) there are transmitted confirmation data to the server (3) via at least the first or second data connection (D1, D2), whereupon the server (3) executes the application.

2. The method according to claim 1, **characterized in that** the first and/or the second data connection (D1, D2) comprises a data connection via the Internet, in particular a cryptographically secured data connection.

3. The method according to claim 1 or 2, **characterized in that** the second data connection (D2) is a data connection with interposition of a contact-type interface as a first communication interface (101), in particular a USB interface.

4. The method according to any of the preceding claims, **characterized in that** the third data connection (D3) is a data connection by means of a contactless interface as a second communication interface (102), in particular an NFC interface and/or a Bluetooth interface.

5. The method according to any of the preceding claims, **characterized in that** the third data connection (D3) is cryptographically secured.

6. The method according to any of the preceding claims, **characterized in that** as a first terminal (2) there is used a computer, in particular a personal computer.

7. The method according to any of the preceding claims, **characterized in that** as a second terminal (4) there is used a mobile terminal, in particular a mobile phone.

8. The method according to any of the preceding claims, **characterized in that** as a portable data carrier (1) there is used a chip card and/or a token.

9. The method according to any of the preceding claims, **characterized in that** the application is an electronic transaction, in particular an electronic banking transaction.

10. The method according to claim 9, **characterized in that** as input data there are transmitted via the first data connection (D1) transaction data for specifying the transaction to be carried out.

11. The method according to any of the preceding claims, **characterized in that** via the second and third data connection (D2, D3) there is transmitted as authentication data an identifier, besides the identifier there being preferably transmitted a summary of the input data received at the server (3).

12. The method according to claim 11, **characterized in that** the identifier is outputted to the user on the second terminal (4), a confirmation of the authentication data being effected by the user inputting the outputted identifier via the first terminal (2) and as confirmation data there being transmitted the inputted identifier via the first data connection (D1) to the server (3), which, if the received identifier corresponds with the identifier originally transmitted via the second data connection (D2), executes the application.

13. The method according to any of the preceding claims, **characterized in that** the confirmation of the authentication data is effected by the user through an input at the second terminal (4), whereupon confirmation data are transmitted to the server (3) via the third and second data connection (D3, D2).

14. The method according to any of the preceding claims, **characterized in that** the application is carried out with the help of a software program stored on the data carrier (1), which can be started by the user after the connection of the data carrier (1) via the first communication interface with the first terminal (2).

15. A portable data carrier, in particular token or chip card, with a first communication interface (101) and a second communication interface (102), wherein the data carrier (1) is set up to carry out a method according to any of the preceding claims.

## Revendications

1. Procédé d'exécution d'une application à l'aide d'un support de données portable (1), le support de données comprenant une première interface de communication (101) et une deuxième interface de communication (102), et, pour l'exécution de l'application, une communication avec un serveur (3) étant nécessaire, dans lequel:
- entre un premier terminal (2) et le serveur (3), par le biais d'un réseau de données (23), une première connexion de données (D1) est établie,
- par un utilisateur, par le biais du premier terminal (2), des données d'entrée spécifiées sont transmises pour traitement par l'application au serveur (3) par le biais de la première connexion de données (D1);
- le support de données (1) étant, par le biais de la première interface de communication (101), connecté avec le premier terminal (2) et une deuxième connexion de données (D2) étant établie entre le support de données (1) et le serveur (3) par le biais du réseau de données (23),
- des données d'authentification pour l'authentification de l'application, sur la base des données d'entrée sont transmises du serveur (3) par le biais de la deuxième connexion de données (D2) entre le serveur (3) et le support de données (1);
- au moyen de la deuxième interface de communication (102), une troisième connexion de données (D3) est établie entre le support de données (1) et un deuxième terminal (4),
- les données d'authentification sont transmises du support de données (1) au deuxième terminal (102) par le biais de la troisième connexion de données (D3) ;
- des données contenues dans les données d'authentification sont délivrées par le deuxième terminal (4) pour la vérification par l'utilisateur;
- en cas de confirmation des données d'authentification par l'utilisateur par le biais du premier ou du deuxième terminal (2, 4), des données de confirmation sont transmises au serveur (3) par le biais d'au moins la première ou deuxième connexion de données (D1, D2), à la suite de quoi le serveur (3) effectue l'application.

2. Procédé selon la revendication 1, **caractérisé en ce que** la première et/ou la deuxième connexion de données (D1, D2) comprend une connexion de données par le biais d'Internet, notamment une connexion de données sécurisée cryptographiquement.

3. Procédé selon la revendication 1 ou 2, **caractérisé en ce que** la deuxième connexion de données (D2) est une connexion de données réalisée avec connexion intermédiaire d'une interface avec contact en tant que première interface de communication (101), notamment une interface USB.

4. Procédé selon une des revendications précédentes, **caractérisé en ce que** la troisième connexion de données (D3) est une connexion de données réalisée au moyen d'une interface sans contact en tant que deuxième interface de communication (102), notamment une interface NFC et/ou une interface Bluetooth.

5. Procédé selon une des revendications précédentes, **caractérisé en ce que** la troisième connexion de données (D3) est sécurisée cryptographiquement.

6. Procédé selon une des revendications précédentes, **caractérisé en ce que** c'est un ordinateur, notamment un ordinateur personnel, qui est utilisé en tant que premier terminal (2).

7. Procédé selon une des revendications précédentes, **caractérisé en ce que** c'est un terminal mobile, notamment un téléphone portable, qui est utilisé en tant que deuxième terminal (4).

8. Procédé selon une des revendications précédentes, **caractérisé en ce que** c'est une carte à puce et/ou un jeton qui est utilisé en tant que support de données portable (1).

9. Procédé selon une des revendications précédentes, **caractérisé en ce que** l'application est une transaction électronique, notamment une transaction électronique d'opération bancaire.

10. Procédé selon la revendication 9, **caractérisé en ce que**, en tant que données d'entrée par le biais de la première connexion de données (D1), des données de transaction pour la spécification de la transaction à exécuter sont transmises.

11. Procédé selon une des revendications précédentes, **caractérisé en ce que**, par le biais de la deuxième et troisième connexion de données (D2, D3), c'est un identificateur qui est transmis en tant que données d'authentification, il étant transmis de préférence, en plus de l'identificateur, un abrégé des données d'entrée reçues au serveur (3).

12. Procédé selon la revendication 11, **caractérisé en ce que** l'identificateur est délivré à l'utilisateur sur le deuxième terminal (4), une confirmation des données d'authentification par l'utilisateur ayant lieu par entrée de l'identificateur délivré par le biais du premier terminal (2) et, en tant que données de confirmation, l'identificateur entré étant, par le biais de la première connexion de données (D1), transmis au serveur (3) qui, en cas de concordance de l'identificateur reçu avec l'identificateur transmis à l'origine par le biais de la deuxième connexion de données (D2), effectue l'application.

13. Procédé selon une des revendications précédentes, **caractérisé en ce que** la confirmation des données d'authentification par l'utilisateur a lieu par le biais d'une entrée sur le deuxième terminal (4), à la suite de quoi des données de confirmation sont transmises au serveur (3) par le biais de la troisième et deuxième connexion de données (D3, D2).

14. Procédé selon une des revendications précédentes, **caractérisé en ce que** l'application est exécutée à l'aide d'un programme logiciel qui est mémorisé sur le support de données portable (1) et qui peut être démarré par l'utilisateur après connexion du support de données (1), par le biais de la première interface de communication, avec le premier terminal (2).

15. Support de données portable, notamment jeton ou carte à puce, comprenant une première interface de communication (101) et une deuxième interface de communication (102), le support de données (1) étant configuré pour exécuter un procédé selon une des revendications précédentes.
